# EUROPÄISCHE PATENTSCHRIFT

(11) **EP 3 342 697 B1**
(45) Veröffentlichungstag und Bekanntmachung des Hinweises auf die Patenterteilung: **31.03.2021**
(21) Anmeldenummer: 17202845.8
(22) Anmeldetag: 21.11.2017
(51) Int. Cl.: B62K 25/28, B62M 6/45

(54) **VERFAHREN ZUR REDUZIERUNG DES KICK-BACK EFFEKTS BEI ELEKTROFAHRRÄDERN UND ELEKTROFAHRRAD**
ELECTRIC BICYCLE AND METHOD FOR REDUCING THE KICK-BACK EFFECT IN ELECTRIC BICYCLES
PROCÉDÉ DE RÉDUCTION DE L'EFFET DE RETOUR DANS DES BICYCLETTES ÉLECTRIQUES ET BICYCLETTE ÉLECTRIQUE

(30) Priorität: 28.12.2016 DE 102016226251
(43) Veröffentlichungstag der Anmeldung: 04.07.2018
(73) Patentinhaber: Robert Bosch GmbH, 70442 Stuttgart (DE)
(72) Erfinder: Dasbach, Gregor, 72074 Tuebingen (DE)

(56) Entgegenhaltungen:
- EP-A1- 2 664 535
- EP-A1- 2 724 925
- DE-A1-102016 002 320

## Beschreibung

### Stand der Technik

Die vorliegende Erfindung betrifft ein Verfahren zur Reduzierung des Kick-Back Effekts bei Elektrofahrrädern. Ferner betrifft die Erfindung ein Fahrrad mit reduziertem Kick-Back Effekt beim Pedalieren.

Viele Fahrräder verfügen heute über einen gefederten Hinterbau. Hierdurch können die Fahreigenschaften bei welligem Untergrund verbessert werden. Ein Nachteil dieser Federung tritt beim Pedalieren auf. Das Drehmoment des Radfahrers ist über die Pedalumdrehung nicht konstant, sondern folgt einem Sinus. Dadurch ist die Kraft auf die Kette nicht konstant. Die Kettenspannung hat jedoch Einfluss auf den Dämpfer des Hinterbaus. Durch die Oszillation der Kettenspannung wird der Dämpfer fortwährend komprimiert und wieder entspannt. Dieser Effekt ist als Kick-Back Effekt bekannt. Neben dem unangenehmen Fahrgefühl geht dadurch auch Energie verloren, die nicht zum Vortrieb des Fahrrads beiträgt.

Um diesen Effekt zu verringern, werden gefederte Hinterbauten speziell ausgestaltet. So kann z.B. der Drehpunkt (Pivot-Point) entlang der Kettenlinie platziert werden. Dadurch werden Hebelkräfte verringert, die durch die Kettenspannung verursacht werden. Durch die Variabilität der Kettenlinie bei unterschiedlichen Gängen sind Hebelkräfte und der Kick-Back Effekt aber nicht vollständig vermeidbar. Diese Art der Aufhängung limitiert das Dämpfungsverhalten. Alternativ gibt es Mehrgelenk-Hinterbauten die mit virtuellen Drehpunkten arbeiten. Auch hier kommt es jedoch zum Kick-Back Effekt Dokument DE102016002320A1 offenbart die Präambeln der unabhängigen Ansprüche 1 und 7.

### Offenbarung der Erfindung

Die Erfindung geht aus von einem Verfahren zur Reduzierung des Kick-Back Effekts eines Dämpfers am gefederten Hinterbau eines Elektrofahrrads, wobei das Elektrofahrrad eine Elektroantriebsvorrichtung zur Erzeugung einer Motorkraft, Pedale zur Erzeugung einer Pedalkraft, eine Fahrradkette zur Kraftübertragung und eine Auswerteeinheit aufweist, den folgenden Schritt aufweisend:
- Erzeugung einer Kettenkraft verminderter periodischer Schwankungen mittels einer antiphasigen Regelung der Motorkraft zur Pedalkraft durch die Auswerteeinheit.

Ferner geht die Erfindung aus von einem Elektrofahrrad mit einem am gefederten Hinterbau des Elektrofahrrads angeordneten Dämpfer zur Reduzierung des Kick-Back Effekts, wobei das Elektrofahrrad eine Elektroantriebsvorrichtung zur Erzeugung einer Motorkraft und Pedale zur Erzeugung einer Pedalkraft, eine Fahrradkette und eine Auswerteeinheit aufweist, wobei die Auswerteeinheit eingerichtet ist, zur Erzeugung einer Kettenkraft verminderter periodischer Schwankungen eine zur Pedalkraft antiphasige Motorkraft zu regeln.

Vorzugsweise ist das Elektrofahrrad als sogenanntes "Fully" ausgebildet. Darunter ist ein vollgefedertes Fahrrad zu verstehen, das neben einer gefederten Gabel einen gefederten Hinterbau aufweist. Bevorzugt weist das Elektrofahrrad einen Mittelmotor auf. Bevorzugt ist das Elektrofahrrad als E-Bike oder als ein Pedelec ausgebildet, bei welchen der Fahrer von einem Elektroantrieb nur dann unterstützt wird, wenn er gleichzeitig auch selbst die Pedale tritt.

Unter einer Kettenkraft verminderter periodischer Schwankungen ist eine annähernd konstante Kettenkraft zu verstehen. Vorzugsweise ist die Kettenkraft vollständig konstant. Dies ist dann der Fall, wenn während des Pedalierens keine periodischen Schwankungen mehr vorhanden sind. Bei Elektrofahrrädern mit Mittelmotor ist die Kettenkraft die Summe der Pedalkraft und der Motorkraft. Physiologisch bedingt oszilliert die Pedalkraft während des Pedalumlaufs. Um eine annähernd konstante Kettenkraft zu erzeugen wird die Motorkraft antiphasig zur Pedalkraft geregelt. Hierdurch kann die Oszillation der Pedalkraft nahezu vollständig eliminiert werden. Dabei ist die Elektroantriebsvorrichtung eingerichtet, mittels der Auswerteeinheit eine antiphasige Regelung auszuführen und eine annähernd konstante Kettenkraft zu erzeugen. Vorzugsweise weist die Elektroantriebsvorrichtung einen Elektromotor und eine Leistungselektronik auf. Bevorzugt ist die Auswerteeinheit ein Teil der Leistungselektronik.

Unter einem Dämpfer wird bei einem Fahrrad mit Rahmenfederung die Feder- und/oder Dämpfereinheit verstanden. Unter einer Elektroantriebsvorrichtung seien im Rahmen der Erfindung die wesentlichen Bauteile elektrischer Antrieb, Akkumulator und Steuereinheit sowie ihr Zusammenwirken zu verstehen. Vorzugsweise federt eine Federung Stöße ab, schwingt jedoch je nach Belastung und Federhärte mehrfach nach bis zur Ruhestellung. Vorzugsweise erfolgt eine Dämpfung mittels Öl. Dabei wird das Öl bei jedem Fahrbahnstoß durch kleine Kanäle gedrückt. Die Öffnungen durch die das Öl fließen kann haben nur einen gewissen Durchlass. Bei höherwertigeren Dämpfungen sind diese Öffnungen und somit der Ölfluss vorzugsweise einstellbar. Vorzugsweise ist der Dämpfer an einem Rahmen des Elektrofahrrades angeordnet, insbesondere an einem Sitzrohr des Elektrofahrrades oder am Gehäuse der Elektroantriebsvorrichtung.

Durch die Minimierung des Kick-Back Effekts lässt sich das Fahrverhalten eines Fully-Elektrofahrrades deutlich verbessern. Daneben ist auch die Reichweite des Elektrofahrrades erhöhbar. Es können neue Hinterbau-Konstruktionen entwickelt werden, da die Lage der Drehpunkte des Hinterbaus weniger kritisch ist. Neben Designvorteilen lassen sich auch Gewicht und Kosten einsparen.

Die Unteransprüche zeigen bevorzugte Weiterbildungen der Erfindung.

Vorteilhaft weist das Verfahren den folgenden Schritt auf:
- Glätten der Schwankungen der Pedalkraft mittels der antiphasigen Regelung, wenn die Motorkraft kleiner ist als die Schwankungen der Pedalkraft.

Um die Oszillation der Pedalkraft weiter zu eliminieren ist es das Regelziel eine möglichst konstante Kraft abzugeben. Ist die Kraft des Motors kleiner als die Schwankungen der Pedalkraft ist es das Ziel diese Schwankungen maximal durch antiphasige Regelung zu glätten. Vorzugsweise ist die Auswerteeinheit eingerichtet, die Motorkraft und die Pedalkraft zu ermitteln und Schwankungen der Pedalkraft mittels Ansteuerung des Elektromotors zu glätten. Mit anderen Worten "füllt" das Motormoment Zeitbereiche geringerer Pedalkräfte zumindest anteilig auf.

Weiter vorteilhaft weist das Verfahren den folgenden Schritt auf:
- Kompensieren der Schwankungen der Pedalkraft mittels der antiphasigen Regelung wenigstens eines Teils der Motorkraft, wenn die Motorkraft größer ist als die Schwankungen der Pedalkraft.

Ist die Motorkraft größer als die Schwankung der Pedalkraft, wird nur ein Teil der Motorkraft antiphasig geregelt, bis die Schwankungen kompensiert sind. Die verbleibende Motorkraft wird als annähernd konstante Kraft überlagert. Dadurch ergibt sich eine annähernd konstante Kraft an der Kette und ein minimaler Kick-Back Effekt. Vorzugsweise ist die Auswerteeinheit eingerichtet, die Motorkraft und die Pedalkraft zu ermitteln und Schwankungen der Pedalkraft mittels Ansteuerung des Elektromotors zu kompensieren.

Weiter vorteilhaft weist das Verfahren den folgenden Schritt auf:
- Überwachen der Pedalkräfte, der Motorkräfte und/oder der Pedalstellung mittels am Elektrofahrrad angeordneter Sensoren.

Dabei stehen die Sensoren zur Weiterleitung von Daten mit der Elektroantriebsvorrichtung in Verbindung. Hierdurch ist eine Überwachung der Pedalkräfte, der Motorkräfte und/oder der Pedalstellung auf einfache Weise ausführbar.

Weiter vorteilhaft weist das Verfahren den folgenden Schritt auf:
- Anpassen der Motorkraft mittels einer dynamischen Regelung.

Mittels der dynamischen Regelung kann die Motorkraft auf einfache Weise angepasst werden. Für ein optimales Regelverhalten ist es wichtig, aus dem Drehmomentverlauf die zu erwartenden Schwankungen zu antizipieren und zu unterscheiden, ob das Abfallen des Fahrerdrehmoments physiologisch durch die Pedalstellung bedingt ist, oder aber beabsichtigt ist, um die Fahrt zu verlangsamen. Ist der Drehmoment-Abfall bedingt durch die Pedalstellung, wird antiphasig Motormoment hinzugegeben. Ansonsten wird der Motor herunter gefahren. Der Kick-Back Effekt lässt sich dadurch erheblich verringern.

Weiter vorteilhaft weist das Verfahren den folgenden Schritt auf:
- Anpassen der Motorkraft mittels der dynamischen Regelung und Berücksichtigung der Abweichung von einem erwarteten Drehmomentverlauf.

Je nach erkanntem Fahrerwunsch wird zwischen konventioneller und antiphasiger Regelung gewechselt. Vorzugsweise wird die Pedalstellung ebenso erfasst wie das Drehmoment. Aus den vorhergegangenen Kurbelumdrehungen wird abgeleitet welcher Drehmomentverlauf zu erwarten ist. Bevorzugt wird dabei berücksichtigt, dass das Fahrer-Drehmoment nicht 180° periodisch ist, sondern eine 360° Periode aufweist (rechtes und linkes Bein sind meist unterschiedlich stark). Liegt der aktuelle Drehmomentverlauf davon deutlich unterhalb der Erwartung, wird dieses als Verlangsamungswunsch des Fahrers interpretiert. Daraufhin wird die antiphasige Regelung ausgesetzt und das Motormoment entsprechend dem aktuellen Fahrerdrehmoment angepasst. Erhöht sich der Drehmomentverlauf wieder gegenüber der Erwartung, kehrt die Regelung zur antiphasigen Regelung zurück.

Weiter vorteilhaft weist das Verfahren den folgenden Schritt auf:
- elektronisches Regeln der Härte des Dämpfers.

Beim Pedalieren entsteht ein dynamisches Wippen des Fahrers, insbesondere aus einem Auf und Nieder sowie einem seitlichen Kippen. Da die Wipp-Kräfte des Fahrers im Wesentlichen die Gegenkräfte der Pedalkräfte sind, sind auch diese bekannt. Wählt man als Dämpfungselement einen Dämpfer variabler Härte, wobei die Härte elektronisch geregelt wird, kann man durch dynamische Anpassung der Härte den Kick-Back Effekt weiter verringern. Diese kann z.B. durch eine Steuerung erfolgen, die als Input wiederum die Pedal- und Motorkräfte verwendet.

Weiter weist das Verfahren den folgenden Schritt auf:
- Messen des Kick-Back Effekts durch Bestimmung des Federwegs oder einer Beschleunigungsmessung am Rahmen des Elektrofahrrads.

Damit ist eine Regelung realisierbar, bei der die Kick-Back Effekte durch Messung des Federwegs oder Beschleunigungsmessung am Rahmen gemessen werden, und die Parameter Federhärte und Motorkraft so geregelt werden können, dass der Kick-Back Effekt optimal kompensiert wird.

### Kurze Beschreibung der Zeichnungen

Nachfolgend wird ein Ausführungsbeispiel der Erfindung unter Bezugnahme auf die begleitenden Zeichnungen im Detail beschrieben. In den Zeichnungen ist:
- Figur 1: eine schematische Ansicht von Komponenten eines erfindungsgemäßen Elektrofahrrades und
- Figur 2: eine schematische Darstellung von Momentverläufen einer Kettenkraft des erfindungsgemäßen Elektrofahrrades über die Zeit.

### Ausführungsform der Erfindung

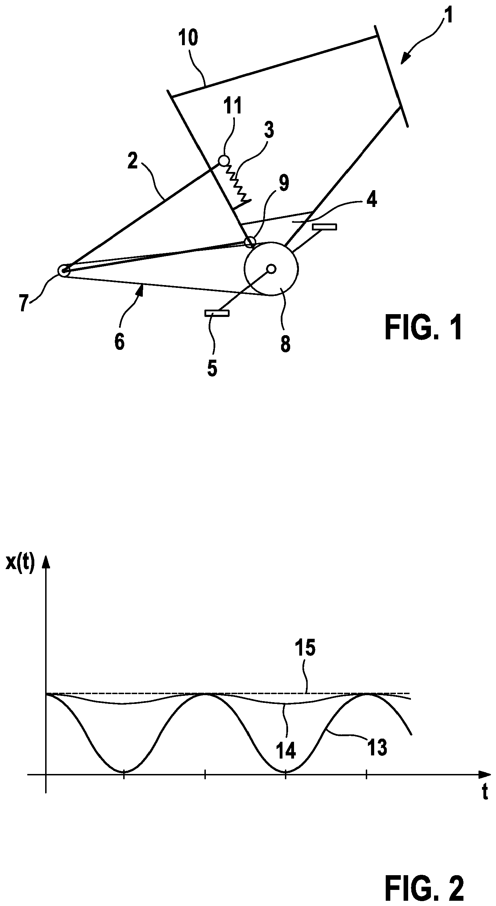

Figur 1 zeigt eine schematische Ansicht diverser Komponenten des erfindungsgemäßen Elektrofahrrades 1. Das Elektrofahrrad 1 ist als "Fully", also als ein vollgefedertes Fahrrad ausgebildet. Damit weist das Elektrofahrrad 1 neben einer gefederten Gabel einen gefederten Hinterbau 2 auf. Weiterhin weist das Elektrofahrrad 1 einen Rahmen 10 auf. Der Hinterbau 2 ist über Drehpunkte 9 und 11 drehbar am Rahmen 10 gelagert. Ferner weist das Elektrofahrrad 1 eine Elektroantriebsvorrichtung 4, Pedale 5 und eine Fahrradkette 6 auf. Die Fahrradkette 6 läuft von einem Ritzel 7 über ein Kettenblatt 8, an dem die Pedale 5 angeordnet sind, und wieder zurück.

Die Elektroantriebsvorrichtung 4 dient zur Erzeugung einer Motorkraft auf die Fahrradkette 6. Die Elektroantriebsvorrichtung 4 ist als Mittelmotorkonzept ausgestaltet. Die Pedale 5 dienen zur Erzeugung einer Pedalkraft auf die Fahrradkette 6. Die Elektroantriebsvorrichtung 4 weist eine Auswerteeinheit (nicht gezeigt) auf.

Ferner weist das Elektrofahrrad 1 einen Dämpfer 3 am gefederten Hinterbau 2 auf. Der Dämpfer 3 ist an einem Sitzrohr des Elektrofahrrads 1 angeordnet und über den Drehpunkt 11 drehbar mit dem Hinterbau 2 verbunden. Der Dämpfer 3 ist eingerichtet, einen Kick-Back Effekt zu reduzieren. Bei dem Elektrofahrrad 1 mit Mittelmotor ist die Kettenkraft die Summe der Pedalkraft und der Motorkraft. Physiologisch bedingt oszilliert die Pedalkraft während des Pedalumlaufs. Durch die Oszillation der Kettenspannung wird der Dämpfer 3 fortwährend komprimiert und wieder entspannt, was den Kick-Back Effekt auslöst. Eine Erzeugung einer annähernd konstanten Kettenkraft erfolgt mittels einer antiphasigen Regelung der Motorkraft zur Pedalkraft durch die Auswerteeinheit. Dabei ist die Elektroantriebsvorrichtung 4 eingerichtet, eine antiphasige Regelung auszuführen und die annähernd konstante Kettenkraft zu erzeugen. Vorzugsweise weist die Elektroantriebsvorrichtung 4 hierzu neben der Auswerteeinheit einen Elektromotor (nicht gezeigt) auf. Hierdurch kann die Oszillation der Pedalkraft nahezu vollständig eliminiert werden. Die Kettenspannung wird während des Pedalierens annähernd konstant gehalten.

Zum Überwachen der Pedalkräfte, der Motorkräfte und/oder der Pedalstellung sind vorzugsweise Sensoren (nicht gezeigt) am Elektrofahrrad 1 angeordnet. Außerdem erfolgt ein Anpassen der Motorkraft mittels einer dynamischen Regelung. Mittels der dynamischen Regelung kann die Motorkraft auf einfache Weise angepasst werden. Für ein optimales Regelverhalten ist es wichtig aus dem Drehmomentverlauf die zu erwartenden Schwankungen zu antizipieren und zu unterscheiden, ob das Abfallen des Fahrerdrehmoments physiologisch durch die Pedalstellung bedingt ist, oder aber beabsichtigt ist, um die Fahrt zu verlangsamen. Ist der Drehmoment-Abfall durch die Pedalstellung bedingt, wird antiphasig Motormoment hinzugegeben, wenn nicht, wird der Motor herunter gefahren.

Da die Wipp-Kräfte des Fahrers im Wesentlichen die Gegenkräfte der Pedalkräfte sind, sind diese bekannt. Wählt man als Dämpfungselement einen Dämpfer 3 mit elektronisch regelbarer Härte, ist durch dynamische Anpassung der Härte der Kick-Back Effekt weiter verringerbar. Ausgehend von den Werten, die aus der verminderten periodischen Schwankung resultieren, wird die Härte des Dämpfers derart angepasst, dass der Kick-Back Effekt erheblich reduziert wird. Stöße, bedingt durch Fahrbahnbedingungen oder durch die Elektroantriebsvorrichtung lassen sich damit einfach kompensieren. Dies erfolgt insbesondere durch eine Steuerung, die als Input wiederum die Pedal- und Motorkräfte verwendet. Erfindungsgemäss ist eine Regelung realisierbar, bei der die Kick-Back Effekte gemessen werden, z.B. durch Messung des Federwegs oder Beschleunigungsmessung am Rahmen, und die Parameter Federhärte und Motorkraft so geregelt werden, dass der Kick-Back Effekt optimal kompensiert wird.

Figur 2 zeigt eine schematische Darstellung von Momentverläufen einer Kettenkraft des erfindungsgemäßen Elektrofahrrades über die Zeit. Dabei werden drei Momentverläufe 13, 14 und 15 unterschieden.

Die beim Pedalieren erzeugten Pedalkräfte verursachen eine Kettenkraft, die einem Momentverlauf 13 folgt, welcher Schwankungen unterworfen ist. Die Kettenkraft folgt dabei einem sinusförmigen Momentverlauf 13.

Der Momentverlauf 14 weist eine Amplitude auf, die im Gegensatz zum Momentverlauf 13 stark verringert ist. Hierzu ist die Auswerteeinheit eingerichtet, die Motorkraft und die Pedalkraft zu ermitteln und Schwankungen der Pedalkraft mittels Ansteuerung des Elektromotors zu glätten. Dabei füllt das Motormoment Zeitbereiche geringerer Pedalkräfte zumindest anteilig auf.

In einem Idealzustand sind keine periodischen Schwankungen mehr vorhanden. Dabei sind die Kettenkraft und damit der Momentverlauf 15 vollständig konstant. Der Idealzustand ist mittels des oben beschriebenen Dämpfers 3 mit elektronisch regelbarer Härte erzielbar.

Durch die Minimierung des Kick-Back Effekts lässt sich das Fahrverhalten eines Fully-Elektrofahrrades deutlich verbessern. Daneben ist auch die Reichweite des Elektrofahrrades erhöhbar. Es können neue Hinterbau-Konstruktionen entwickelt werden, da die Lage der Drehpunkte des Hinterbaus weniger kritisch ist. Neben Designvorteilen lassen sich so auch Gewicht und Kosten einsparen.

## Patentansprüche

1. Verfahren zur Reduzierung des Kick-Back Effekts eines Dämpfers (3) am gefederten Hinterbau (2) eines Elektrofahrrads (1), wobei das Elektrofahrrad (1) eine Elektroantriebsvorrichtung (4) zur Erzeugung einer Motorkraft, Pedale (5) zur Erzeugung einer Pedalkraft, eine Fahrradkette (6) zur Kraftübertragung und eine Auswerteeinheit aufweist, **dadurch gekennzeichnet, dass** das Verfahren die folgenden Schritte aufweist
- Erzeugung einer Kettenkraft verminderter periodischer Schwankungen mittels einer antiphasigen Regelung der Motorkraft zur Pedalkraft durch die Auswerteeinheit, und
- Messen des Kick-Back Effekts durch Bestimmung eines Federwegs oder einer Beschleunigungsmessung am Rahmen (10) des Elektrofahrrads (1).

2. Verfahren nach Anspruch 1, den folgenden Schritt aufweisend:
- Glätten der Schwankungen der Pedalkraft mittels der antiphasigen Regelung, wenn die Motorkraft kleiner ist als die Schwankungen der Pedalkraft.

3. Verfahren nach einem der vorhergehenden Ansprüche, den folgenden Schritt aufweisend:
- Kompensieren der Schwankungen der Pedalkraft mittels der antiphasigen Regelung wenigstens eines Teils der Motorkraft, wenn die Motorkraft größer ist als die Schwankungen der Pedalkraft.

4. Verfahren nach einem der vorhergehenden Ansprüche, den folgenden Schritt aufweisend:
- Überwachen der Pedalkräfte, der Motorkräfte und/oder der Pedalstellung mittels am Elektrofahrrad angeordneter Sensoren.

5. Verfahren nach einem der vorhergehenden Ansprüche, den folgenden Schritt aufweisend:
- Anpassen der Motorkraft mittels einer dynamischen Regelung.

6. Verfahren nach einem der Ansprüche 1 bis 5, den folgenden Schritt aufweisend:
- elektronisches Regeln der Härte des Dämpfers (3).

7. Elektrofahrrad (1) mit einem am gefederten Hinterbau (2) des Elektrofahrrads (1) angeordneten Dämpfer (3) zur Reduzierung des Kick-Back Effekts, wobei das Elektrofahrrad (1) eine Elektroantriebsvorrichtung (4) zur Erzeugung einer Motorkraft und Pedale (5) zur Erzeugung einer Pedalkraft, eine Fahrradkette (6) und eine Auswerteeinheit aufweist, wobei die Auswerteeinheit eingerichtet ist, zur Erzeugung einer Kettenkraft verminderter periodischer Schwankungen eine zur Pedalkraft antiphasige Motorkraft zu regeln, **dadurch gekennzeichnet, dass** der Kick-Back Effekt durch Bestimmung eines Federwegs oder einer Beschleunigungsmessung am Rahmen (10) des Elektrofahrrads (1) gemessen wird.

8. Elektrofahrrad (1) nach Anspruch 7, wobei die Elektroantriebsvorrichtung (4) eingerichtet ist,
- ein Glätten der Schwankungen der Pedalkraft mittels der antiphasigen Regelung auszuführen, wenn die Motorkraft kleiner ist als die Schwankungen der Pedalkraft und
- ein Kompensieren der Schwankungen der Pedalkraft mittels der antiphasigen Regelung wenigstens eines Teils der Motorkraft auszuführen, wenn die Motorkraft größer ist als die Schwankungen der Pedalkraft.

9. Elektrofahrrad (1) nach einem der Ansprüche 7 bis 8, wobei zur Überwachung der Pedalkräfte, der Motorkräfte und/oder der Pedalstellung Sensoren am Elektrofahrrad (1) vorgesehen sind.

## Claims

1. Method for reducing the kick-back effect of a shock absorber (3) on the spring-mounted chainstay (2) of an electric bicycle (1), wherein the electric bicycle (1) has an electric drive apparatus (4) for generating a motor force, pedals (5) for generating a pedal force, a bicycle chain (6) for transmitting force, and an evaluation unit, **characterized in that** the evaluation unit comprises the following steps:
- generating a chain force of reduced periodic fluctuations by means of anti-phase control of the motor force to the pedal force by the evaluation unit,
- measuring the kick-back effect by determining a spring travel or an acceleration measurement on the frame (10) of the electric bicycle (1).

2. Method according to Claim 1, comprising the following step:
- smoothing the fluctuations in the pedal force by means of anti-phase control when the motor force is smaller than the fluctuations in the pedal force.

3. Method according to either of the preceding claims, comprising the following step:
- compensating for the fluctuations in the pedal force by means of the anti-phase control of at least one portion of the motor force if the motor force is greater than the fluctuations in the pedal force.

4. Method according to one of the preceding claims, comprising the following step:
- monitoring the pedal forces, the motor forces and/or the pedal position by means of sensors which are arranged on the electric bicycle.

5. Method according to one of the preceding claims, comprising the following step:
- adjusting the motor force by means of dynamic control.

6. Method according to one of Claims 1 to 5, comprising the following step:
- electronically controlling the hardness of the shock absorber (3).

7. Electric bicycle (1) comprising a shock absorber (3), which is arranged on the spring-mounted chainstay (2) of the electric bicycle (1), for reducing the kick-back effect, wherein the electric bicycle (1) has an electric drive apparatus (4) for generating a motor force and pedals (5) for generating a pedal force, a bicycle chain (6) and an evaluation unit, wherein the evaluation unit is designed to control a motor force, which is anti-phase in relation to the pedal force, for the purpose of generating a chain force of reduced periodic fluctuations, **characterized in that** the kick-back effect is measured by determining a spring travel or an acceleration measurement on the frame (10) of the electric bicycle (1).

8. Electric bicycle (1) according to Claim 7, wherein the electric drive apparatus (4) is designed
- to execute smoothing of the fluctuations in the pedal force by means of anti-phase control if the motor force is smaller than the fluctuations in the pedal force, and
- to execute compensation of the fluctuations in the pedal force by means of anti-phase control of at least one portion of the motor force if the motor force is greater than the fluctuations in the pedal force.

9. Electric bicycle (1) according to either of Claims 7 and 8, wherein sensors are provided on the electric bicycle (1) for monitoring the pedal forces, the motor forces and/or the pedal position.

## Revendications

1. Procédé permettant de réduire l'effet de retour d'un amortisseur (3) sur la structure arrière amortie (2) d'une bicyclette électrique (1), la bicyclette électrique (1) présentant un dispositif d'entraînement électrique (4) pour produire une force de moteur, des pédales (5) pour produire une force sur les pédales, une chaîne de bicyclette (6) pour la transmission de force et une unité d'évaluation, **caractérisé en ce que** l'unité d'évaluation présente les étapes suivantes consistant à :
- produire une force de chaîne à variations périodiques diminuées au moyen d'une régulation en antiphase avec la force de moteur par rapport à la force sur les pédales par l'unité d'évaluation,
- mesurer l'effet de retour en déterminant un débattement ou une mesure d'accélération au niveau du cadre (10) de la bicyclette électrique (1).

2. Procédé selon la revendication 1, présentant l'étape suivante consistant à :
- lisser les variations de la force sur les pédales au moyen de la régulation en antiphase si la force de moteur est inférieure aux variations de la force sur les pédales.

3. Procédé selon l'une quelconque des revendications précédentes, présentant l'étape suivante consistant à :
- compenser les variations de la force sur les pédales au moyen de la régulation en antiphase d'au moins une partie de la force de moteur si la force de moteur est supérieure aux variations de la force sur les pédales.

4. Procédé selon l'une quelconque des revendications précédentes, présentant l'étape suivante consistant à :
- surveiller les forces de pédale, les forces de moteur et/ou la position de pédale au moyen de capteurs disposés sur la bicyclette électrique.

5. Procédé selon l'une quelconque des revendications précédentes, présentant l'étape suivante consistant à :
- adapter la force de moteur au moyen d'une régulation dynamique.

6. Procédé selon l'une quelconque des revendications précédentes 1 à 5, présentant l'étape suivante consistant à :
- réguler de manière électronique la dureté de l'amortisseur (3).

7. Bicyclette électrique (1), comprenant un amortisseur (3) disposé sur la structure arrière amortie (2) de la bicyclette électrique (1) pour réduire l'effet de retour, la bicyclette électrique (1) présentant un dispositif d'entraînement électrique (4) pour produire une force de moteur, des pédales (5) pour produire une force sur les pédales, une chaîne de bicyclette (6) et une unité d'évaluation, l'unité d'évaluation étant aménagée pour réguler une force de moteur en antiphase avec la force sur les pédales afin de produire une force de chaîne à variations périodiques diminuées, **caractérisée en ce que** l'effet de retour est mesuré en déterminant un débattement ou une mesure d'accélération au niveau du cadre (10) de la bicyclette électrique (1).

8. Bicyclette électrique (1) selon la revendication 7, dans laquelle le dispositif d'entraînement électrique (4) est aménagé pour effectuer
- un lissage des variations de la force sur les pédales au moyen de la régulation en antiphase si la force de moteur est inférieure aux variations de la force sur les pédales, et
- une compensation des variations de la force sur les pédales au moyen de la régulation en antiphase d'au moins une partie de la force de moteur si la force de moteur est supérieure aux variations de la force sur les pédales.

9. Bicyclette électrique (1) selon l'une quelconque des revendications 7 à 8, dans laquelle des capteurs sont prévus sur la bicyclette électrique (1) pour surveiller les forces de pédale, les forces de moteur et/ou la position de pédale.
